# EUROPÄISCHE PATENTANMELDUNG

(11) **EP 2 433 887 A1**
(43) Veröffentlichungstag der Anmeldung: **28.03.2012**
(21) Anmeldenummer: 11181882.9
(22) Anmeldetag: 19.09.2011
(51) Int. Cl.: B65G 69/18, B65D 90/62

(54) **Passivklappe für Mehrfachklappenvorrichtungen sowie Mehrfachklappenvorrichtung, insbesondere mit einer solchen Passivklappe**

(30) Priorität: 24.09.2010 DE 102010041383; 24.01.2011 DE 102011009303
(71) Anmelder: Andocksysteme G. Untch GmbH, 79410 Badenweiler (DE)
(72) Erfinder: Untch, Günter, 79379 Müllheim (DE)
(74) Vertreter: Neunert, Peter Andreas

(57) **Zusammenfassung**

Die Erfindung betrifft eine Passivklappe (10, 30, 300) für Mehrfachklappenvorrichtungen, zum Verschließen eines Behälters oder einer Leitung. Erfindungsgemäß ist die Passivklappe (10, 30, 300) frei von positiv aus der Passivklappe (10, 30, 300) herausragenden Lagerstutzen ausgebildet.

Die Erfindung betrifft ferner eine Mehrfachklappenvorrichtung für ein kontaminationsfreies Verbinden zweier Gebinde oder zweier Leitungen, mit um eine einzige Achse (A) drehbaren Teilklappen. Erfindungsgemäß sind mindestens drei im Wesentlichen parallel zueinander angeordnete und umweltdicht miteinander verspannbare Teilklappen (10, 20, 30) um die einzige gemeinsame Achse (A) drehbar.

## Beschreibung

Die Erfindung betrifft eine Passivklappe für Mehrfachklappenvorrichtungen gemäß der in Anspruch 1 angegebenen Art sowie eine Mehrfachklappenvorrichtung der in Anspruch 5 angegebenen Art, insbesondere mit einer solchen Passivklappe. Gattungsgemäße Mehrfachklappenvorrichtungen finden Anwendungen in einem Bereich kontaminationsfreier Andocksysteme für Verfahren und Anlagen für sensible bzw. toxische Feststoffe, vornehmlich in der pharmazeutischen Industrie.

Als Technologien für das An- und Abdocken von einem Gebinde an eine Prozesseinheit oder einer Leitung an ein Gebinde oder einer Leitung an eine weitere Leitung sind eine Doppelklappentechnologie für eine Verwendung an starren Gebinden und ein flexibler Halbverschluss für eine weitere Verwendung an flexiblen Gebinden etabliert. Die Gebinde werden in dieser Anmeldung auch unter dem Begriff Behälter zusammengefasst.

Die Erfindung stellt nun für die erstgenannte Verwendung in dem Bereich der Doppelklappen, je nach Sichtweise auch Halbklappen genannt, erschließt mit einem neuen Technologieschritt bisher nicht mögliche Anwendungsbereiche.

Bekannte Doppel- oder Halbklappensysteme bestehen aus jeweils zwei Halbklappen. Jede Halbklappe verschließt ein Gebinde dicht. Nach dem Andocken und einem damit einhergehenden Vereinigen mit einer zweiten Halbklappe können für den Produkttransfer von einem ersten Gebinde in ein zweites Gebinde beide Halbklappen um eine gemeinsame Achse gedreht werden.

In der Regel bestehen die bekannten Systeme jeweils aus einer aktiven, in der Regel fest an Anlagen montierten Halbklappe und einer passiven, in der Regel an mobilen Gebinden montierten Halbklappe. Die aktive Halbklappe kann zur Drehung angesteuert werden, während die zweite Halbklappe mitgenommen wird.

Ein Nachteil bei den bekannten Doppelklappensystemen ist, dass ein direktes Andocken von mobilen Gebinden mit ihren jeweiligen passiven Halbklappen aneinander nicht möglich ist, weil die Ansteuerung für die Drehung in diesem Fall fehlt. Ein komplizierter Andockmechanismus bestehend aus zwei Rücken an Rücken montierten Aktivklappen ist derzeit erforderlich, um diesen oftmals vorkommenden Anwendungsfall realisieren zu können.

Gemäß einer alternativen Vorrichtung für das Andocken zweier passiver Halbklappen gemäß EP 1 947 039 A1 werden passive Halbklappen mittels eines zwischen die passiven Halbklappen angeordneten Antriebsrings angedockt und geöffnet.

Ein Andocken von Gebinden aneinander unter Beibehaltung einer Zonentrennung im abgedockten Zustand der Gebinde ist bei der alternativen Vorrichtung nicht möglich. Die Zonentrennung wäre beispielsweise beim Austrag aus einem Isolator erforderlich oder in Fabriken, in denen mittels Schwerkraft das Material durch verschiedene Stockwerke transportiert wird, wobei die Stockwerke jeweils verschiedenen Raumzonen zugeordnet sind.

Zonentrennung in diesem Sinne bedeutet, dass eine Trennwand, beispielsweise ein Deckendurchbruch, zwischen zwei verschiedenen Zonen auch bei nicht angedockten Gebinden bzw. Prozesseinheiten vollkommen geschlossen ist, und somit die Zonentrennung weiterhin gewährleistet ist.

Der Antriebsring gem. EP 1 947 039 A1 bildet zwischen den Zonen einen Zwischenraum zwischen den passiven Klappen und ist eine Schwachstelle im Hinblick auf Kontaminationsfreiheit. Der Zwischenraum wird kontaminiert bzw. kontaminiert selbst die Umgebung, sobald eine Passivklappe abgenommen wird. Ferner kann aufgrund der bekannten Krafteinleitungstechnologie für solche Antriebsringe mit einem Antriebsschwert keine vollständig aus Kunststoff bestehende Halbklappe realisiert werden. Das hohe notwendige Drehmoment, eingetragen über das Antriebsschwert, würde als Lagerstutzen benötigte Halbschäfte der Passivklappen nach recht kurzer Zeit deformieren und somit unbrauchbar machen.

Der Bedarf an vollständig aus Kunststoff bestehenden Halbklappen besteht jedoch schon immer für Anwendungen, bei denen das Gewicht der jeweiligen Halbklappe eine große Rolle spielt, bzw. bei denen Kunststoffhalbklappen an Kunststoffbehältern sogar für den Einmalgebrauch angedacht werden.

Der Erfindung liegen die oben genannten Probleme bekannter Mehrfachklappenvorrichtungen zugrunde, deren Nachteile zu überwinden sind.

Der Erfindung liegt die Idee zugrunde, keinen Andockmechanismus bestehend aus nur zwei Halbklappen zu realisieren, sondern aus drei Drittelklappen oder sogar mehreren Teilklappen, die um eine einzige gemeinsame Achse rotierbar sind. Die Drittel, - bzw. Teilklappen liegen flächig aneinander, sodass keine Zwischenräume unausgefüllt bleiben und kontaminiert werden oder selbst kontaminieren können.

Es werden Passivklappen ohne Lagerstutzen vorgeschlagen. Solche Passivklappen ermöglichen auch eine Ausführungsform ohne echte Aktivklappe sondern stattdessen mit einem zwischen die Passivklappen einsetzbaren Werkzeug.

Die Probleme werden mindestens teilweise gelöst durch eine Passivklappe mit den kennzeichnenden Merkmalen des Anspruchs 1 in Verbindung mit seinen Oberbegriffsmerkmalen wie auch durch eine Mehrfachklappenvorrichtung mit den kennzeichnenden Merkmalen des Anspruchs 5 in Verbindung mit seinen Oberbegriffsmerkmalen.

Weitere vorteilhafte Ausgestaltungen der Erfindung bilden die Gegenstände der Unteransprüche.

Die Passivklappe für Mehrfachklappenvorrichtungen ist geeignet zum Verschließen eines Behälters oder einer Leitung. Die Passivklappe ist um eine Achse drehbar in einem Gehäuse angeordnet, dass wiederum dicht mit dem Behälter oder dem Rohr verbunden ist. Auch können entsprechende Öffnungen des Behälters oder der Leitung als Gehäuse ausgebildet sein. In einer Schließstellung ist mittels der Passivklappe der Behälter oder die Leitung vollumfänglich abgedichtet verschlossen. In einer Offenstellung lässt die Passivklappe wenigstens einseitig einen Durchfluss eines fluiden Mediums in einer Durchflussrichtung passieren.

Erfindungsgemäß ist die Passivklappe frei von positiv aus der Passivklappe herausragenden Lagerstutzen ausgebildet.

Die erfindungsgemäße Passivklappe weist keine Partialwellenstummel auf, die bei bekannten Mehrfachklappenvorrichtungen notwendig waren. Es ist eine drehbare Aufnahme in einem Gehäuse vorgeschlagen, die eine Verwendung von anderen Materialien für die Passivklappe, insbesondere Kunststoff, eröffnet. Somit sind kostengünstigere Passivklappen vorgeschlagen. Die Passivklappen können in üblichen Zweifachklappenvorrichtungen verwendet werden und in neuartigen Dreifachklappenvorrichtungen, wie sie ebenfalls Gegenstand der Anmeldung sind.

Gemäß einer vorteilhaften Ausführungsform der Passivklappe sind wenigstens zwei längs der Achse gegenüberliegende Lagernuten als Halbkreiskurven um die Achse ausgeführt. Die Lagernuten sind negativ in die Passivklappe hinein ausgespart.

Gemäß einer weiteren vorteilhaften Ausführungsform der Passivklappe erstreckt sich längs der Achse eine Längsnut über eine dem Behälter oder der Leitung abwendbare Schnittstellenfläche der Passivklappe hinweg. In die Längsnut hinein ist ein die Drehbewegung der Passivklappe übertragendes Werkzeug konturschlüssig einlegbar.

Gemäß einer weiteren vorteilhaften Ausführungsform der Passivklappe ist mittig in einer dem Behälter oder der Leitung abwendbaren Schnittstellenfläche ein bis zu einer die Schnittstellenfläche radial außen abschließenden Dichtfläche reichender, abgesenkter Bereich angeordnet, sodass zwischen der Passivklappe und einer weiteren Klappe ein Hohlraum ausgebildet ist.

Ein solcher Hohlraum entsteht nicht wegen des einzusetzenden Werkzeugs sondern zwischen den Passivklappen, die einander dennoch unmittelbar mit wenigstens nahezu vollständig umlaufenden Dichtflächen abdichten.

Bei Mehrfachklappenvorrichtungen, die von der Erfindung betroffen sind, ist an dem Gebinde, dem Behälter, der Leitung bzw. der Prozesseinheit eine passive Teilklappe oder die Passivklappe angebracht, die prinzipiell den konventionellen Halbklappen entspricht.

In einer der erfindungsgemäßen Mehrfachklappenvorrichtungen mit drei Klappen reicht die jeweils dem Gebinde bzw. der Prozesseinheit abgewandt nach außen gerichtete Schnittstellenfläche der jeweiligen als Passivklappe ausgebildeten Teilklappe abweichend zu bekannten Halbklappen nicht bis zu einer Ebene in der sich die Achse befindet. Die jeweilige Schnittstellenfläche steht gegenüber einer senkrecht zu der Durchflussrichtung ausgerichteten Ebene parallel zu der Achse um einige Millimeter zurück. Die passiven Teilklappen werden im Weiteren erste und dritte Teilklappe genannt.

Die erste und dritte Teilklappe sind vorteilhaft jeweils eine Tellerkonstruktion mit einem Nenndurchmesser, die eine Tellerlagerung umfassend nicht über den Nenndurchmesser herausragt. Jede Teilklappe weist einen Teller auf, der einem Querschnitt eines zu verschließenden Rohrs entspricht. Die Teller der Tellerkonstruktion weisen im Vergleich zu den konventionellen Halbklappen gemäß vorteilhaften Ausführungsformen der Erfindung keinen Wellenschaft, Wellenstummel oder Zapfen mehr auf.

Die Fertigung der als Passivklappen ausgebildeten Teilklappen ist mithin deutlich kostengünstiger zu realisieren als es bekannte Passivklappen sind.

Gemäß einer weiteren vorteilhaften Ausführungsform stellt eine weitere, fast vollkommen herkömmlich anmutende und in sich vollkommen dichtende als Aktivklappe ausgebildete zweite Teilklappe einen Teil einer Antriebseinheit für die gesamte Mehrfachklappe dar. An die zweite Teilklappe sind von beiden Seiten die jeweiligen oben beschriebenen passiven Teilklappen andockbar. Nach dem Andocken können alle Teilklappen um die gemeinsame Achse gedreht werden.

Drei oder mehrere um eine Achse drehende Drittel- oder Teilklappen erfordern Lagerungen für sämtliche Klappen, die sehr exakt aufeinander abgestimmt sein müssen, um ein gemeinsames Drehen zu erlauben.

Im abgedockten Zustand kann diese zweite Teilklappe nun aufgrund ihrer Eigendichtigkeit die eingangs beschriebene Zonentrennung aufrechterhalten, während die Gebinde sich in den jeweils unterschiedlichen Zonen bewegen. In der Andockstellung ist ein Produkttransfer beispielsweise körnigen Materials in Durchflussrichtung unter vollkommener Aufrechthaltung dieser Zonentrennung und völlig kontaminationsfrei realisierbar, weil nach dem Schließen der Teilklappen die erste und/oder die dritte Teilklappe von der zweiten Teilklappe abgedockt werden kann, ohne eine kontaminierte Fläche offenzulegen.

Die Krafteinleitung zum Öffnen und Schließen der Teilklappen geschieht immer über volle Telleroberflächen, was eine Verwendung von Kunststoffen für die erste und dritte Teilklappe ohne Probleme erlaubt.

Ein weiterer Aspekt der passiven Teilklappen ist eine gesicherte Verriegelung dieser Klappe im abgedockten Zustand, damit ein unkontrolliertes Öffnen sicher vermieden werden kann. Dies wird bei bekannten Systemen mit metallischen Verriegelungsstiften realisiert.

Um auch diesen Aspekt möglichst einfach und ohne Verwendung dieser metallischen Stifte umsetzen zu können, ist eine vorteilhafte Ausführungsform vorgesehen, bei der ein Passivgehäuse der jeweiligen passiven Teilklappe als ein 2-Komponenten-Kunststoffspritzgussteil ausgeführt ist, welches ähnlich wie eine Spannzange den Klappenteller im nicht angedockten Zustand in Position hält.

Ein spreizdornähnlicher Kern des Passivgehäuses aus festem Kunststoff wird mit einem Elastomer vollständig umspritzt und stellt damit ein fertiges Dichtungsgehäuse dar.

Beim Andockvorgang wird bei der Verriegelung der vorteihalft ausgeführten Passivgehäuse mit einem Aktivgehäuse das jeweilige Passivgehäuse durch eine konische Gegenkontur in der zweiten Teilklappe gespreizt. Das gespreizte Passivgehäuse gibt die passive Teilklappe für ein Umschalten von der Schließstellung in die Offenstellung frei.

Dadurch kann das erforderliche Öffnungsdrehmoment im Vergleich zu konventionellen Klappen signifikant reduziert werden.

Das Spreizdornprinzip erfordert eine exakte Abstimmung von Verriegelungskraft auf die abgedockten Teilklappen und Entriegelungskraft beim Andockvorgang, um eine sichere Funktion zu gewährleisten.

Das 3-Klappensystem erlaubt weitere interessante Anwendungen:
So kann auch problemlos nur ein Gebinde oder eine Prozesseinheit an einer Seite der zweiten Teilklappe angedockt, geöffnet und entleert werden, ohne dass die nach außen gerichtete Oberfläche der an dem Gebinde oder der Prozesseinheit befindlichen passiven Teilklappe mit Produkt kontaminiert wird.
Ebenso kann die aktive zweite Teilklappe als Waschklappe ausgelegt werden, wobei die zweite Teilklappe integrierte Waschdüsen aufweist, welche ein Reinigen von Drittelklappen im angedockten, geöffnetem Zustand erlauben.

Auch bei diesem Waschvorgang können entweder zwei angedockte Gebinde oder Prozesseinheiten miteinander, oder auch nur ein angedocktes Gebinde oder eine Prozesseinheit gewaschen werden, wenn anstelle der dritten Teilklappe ein Waschadapter z.B. als Ablaufbehälter angedockt wird.

Vorteile der erfindungsgemäßen Mehrfachklappenvorrichtung sind demnach eine
- Andockmöglichkeit von Gebinden/Prozesseinheiten mit nur jeweils passiven Teilklappen unter vollständiger Beibehaltung der Zonentrennung sowie eine
- Verfügbarkeit vollständig aus Kunststoff bestehender passiver Teillklappen durch optimalen Drehmomenteintrag und Spreizdornverriegelungsprinzip.

Hierdurch wird eine Verbindung zwischen flexiblen Einweggebinden und starren Edelstahlkomponenten ermöglicht, bzw. ein Bindeglied geschaffen. Erstmals erlaubt eine Mehrfachklappenvorrichtung mit kostengünstig herzustellenden Passivklappen ein Andocken von mobilen Gebinden oder Leitungen miteinander, wobei die Robustheit der Klappentechnologie Vorteile hinsichtlich Standfestigkeit bietet. Dennoch kann eine erfindungsgemäße Passivklappe aufgrund der einfachen und vollständig aus Kunststoff bestehenden Bauweise sogar als Einmalkomponente betrachtet werden.

Hoch flexible Anwendungsmöglichkeiten mit Öffnungs- und Entleermöglichkeit auch nur eines angedockten Gebindes/Prozesseinheit unter Beibehaltung der Kontaminationsfreiheit an der Gebinde-/Prozessklappe sind erschlossen.

Nachfolgend wird die Erfindung anhand von Figuren näher beschrieben.

Es zeigen:
Fig. 1 eine perspektivische Darstellung einer Mehrfachklappenvorrichtung gemäß einem Ausführungsbeispiel in einer Schließstellung,
Fig. 2 eine weitere perspektivische Darstellung der Mehrfachklappenvorrichtung aus Fig. 1 in einer Offenstellung,
Fig. 3 eine perspektivische Explosionsdarstellung der Mehrfachklappenvorrichtung gemäß Fig. 1,
Fig. 4 einen Axialschnitt durch die Mehrfachklappenvorrichtung gemäß Fig. 1 entlang einer Achse, um die Teilklappen gemeinsam verdrehbar sind,
Fig. 5 einen Axialschnitt durch die Mehrfachklappenvorrichtung in Offenstellung gemäß Fig. 2 entlang der Achse,
Fig. 6 einen Axialschnitt durch die Mehrfachklappenvorrichtung gemäß Fig. 1 entlang einer Senkrechten zu Achse,
Fig. 7 einen Axialschnitt durch die Mehrfachklappenvorrichtung gemäß Fig. 2,
Fig. 8 eine perspektivische Ansicht einer passiven Teilklappe mit einem Passivgehäuse der Mehrfachklappenvorrichtung gemäß Fig. 2 in losgelöster Darstellung ohne weitere Teilklappen und
Fig. 9 eine Ansicht auf eine Doppelklappenvorrichtung mit erfindungsgemäßen Passivklappen analog zur Darstellung der Fig. 3.

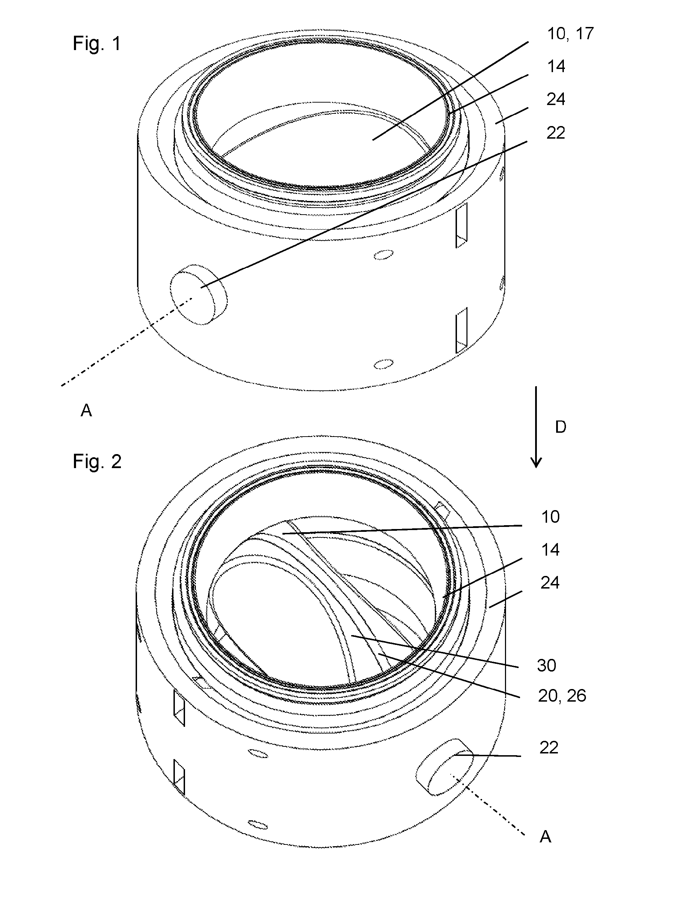

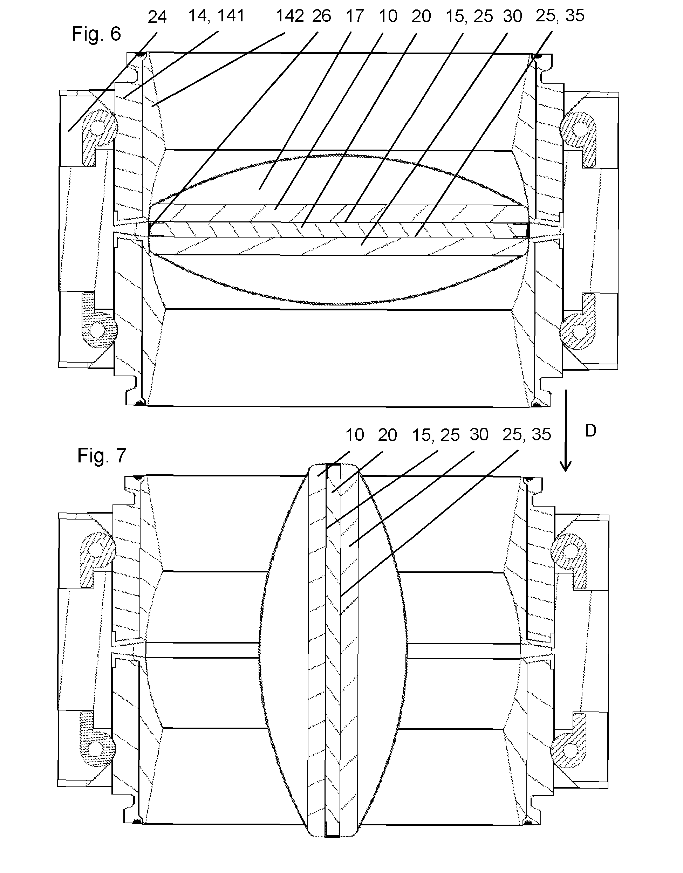

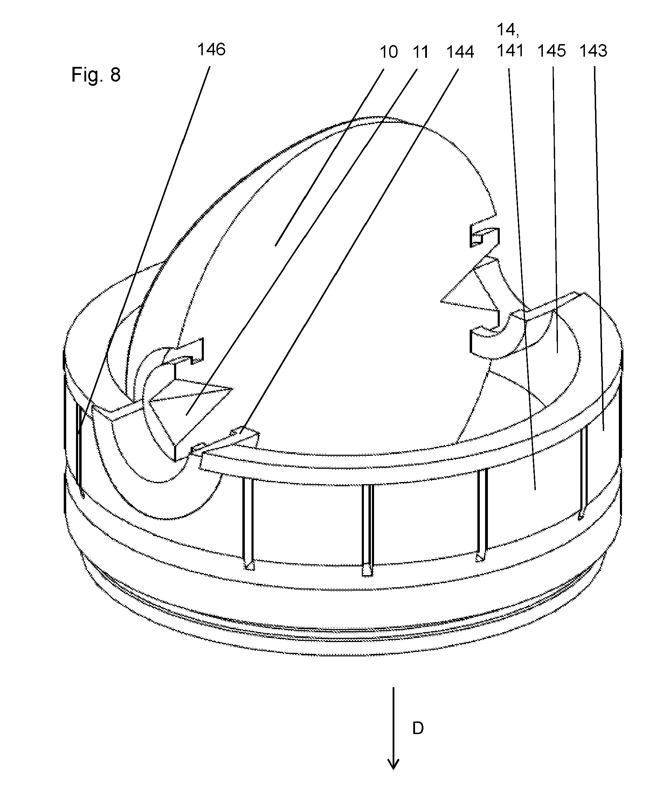

In den Figuren 1 bis 8 ist ein Ausführungsbeispiel einer erfindungsgemäßen Mehrfachklappenvorrichtung für ein kontaminationsfreies Verbinden zweier Gebinde oder zweier Leitungen dargestellt, wobei die Fig. 8 lediglich eine Passivklappe mit Passivgehäuse zeigt und weitere Bestandteile der Mehrfachklappenvorrichtung in Fig. 8 ausgeblendet sind.

Gleiche Teile sind mit gleichen Bezugszeichen versehen. Der besseren Übersicht halber sind nicht in allen Figuren alle Bezugszeichen eingetragen.

In den Figuren 1 und 2 ist die Mehrfachklappenvorrichtung in unterschiedlichen Stellungen dargestellt. Fig. 1 zeigt eine Schließstellung und Fig. 2 eine Offenstellung. Zum Umstellen zwischen Schließstellung und Offenstellung sind Teilklappen 10, 20, 30 um eine einzige Achse A drehbar. Die Achse A liegt senkrecht zu einer Durchflussrichtung D, in der Material von dem ersten Gebinde bzw. der ersten Leitung in das zweite Gebinde bzw. die zweite Leitung durch die Mehrfachklappenvorrichtung hindurch geleitet werden kann, wenn die Teilklappen 10, 20, 30 in Offenstellung gedreht sind.

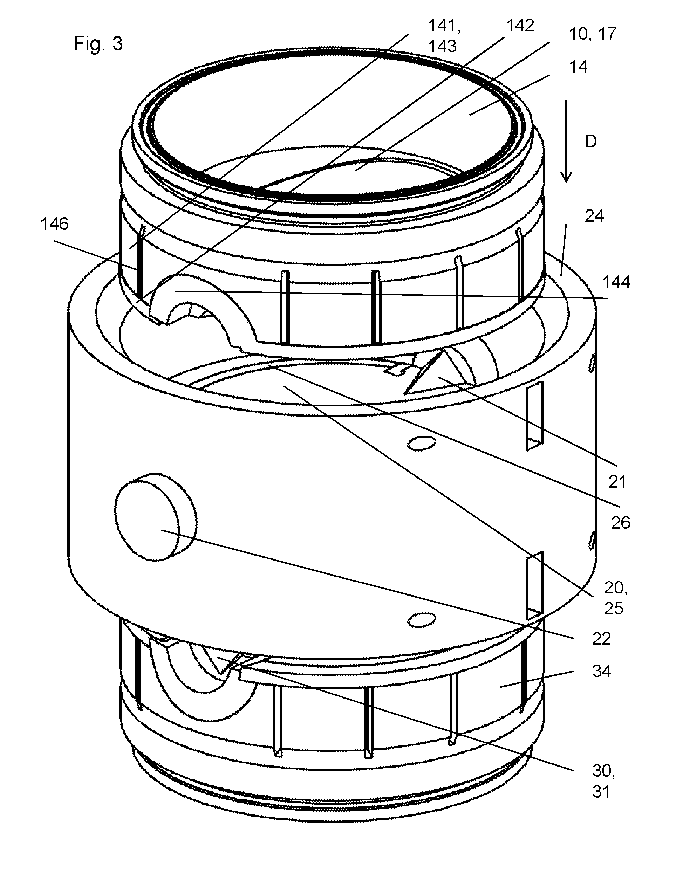

Die Teilklappen 10, 20, 30 sind jeweils in einem Gehäuse 14, 24, 34 angeordnet, sodass sie in einer Andockstellung miteinander zugewandten Schnittstellenflächen 15, 25, 35 aufeinanderliegen und gegeneinander abgedichtet sind. Die Figuren 1 und 2 stellen eine solche Andockstellung perspektivisch dar, bei der die Schnittstellenflächen 15, 25, 35 auf Kontakt gebracht worden sind. Im Unterschied dazu zeigt Fig. 3 eine Explosionsdarstellung, bei der die Teilklappen 10, 20, 30 nicht mit ihren Schnittstellenflächen 15, 25, 35 in Kontakt stehen, sondern beabstandet voneinander in der Durchflussrichtung D ausgerichtet übereinander angeordnet sind. So kann eine Stellung kurz vor Erreichen der Andockstellung aussehen.

In dem dargestellten Ausführungsbeispiel sind drei Teilklappen der Mehrfachklappenvorrichtung in Anlage zueinander bringbar, die auch Drittelklappen genannt werden können. Von den Teilklappen 10, 20, 30 funktionieren eine erste Teilklappe 10 und eine dritte Teilklappe 30 als Passivklappen und eine zweite Teilklappe 20 als Aktivklappe, weil die zweite Teilklappe 20 um die Achse A von einem Antrieb angetrieben in einem Aktivgehäuse 24 drehbar gelagert verschwenkbar ist. In Andockstellung wird beim Umstellen von Schließstellung in Offenstellung oder umgekehrt mindestens eine der Passivklappen durch die Aktivklappe mitgenommen. Die Mehrfachklappenvorrichtung funktioniert schon, wenn nur die Aktivklappe an eine einzige Passivklappe angedockt ist, beispielsweise in einem Reinigungsvorgang. Es bedarf also der zweiten Passivklappe erst im Regelbetrieb, wenn zwei Gebinde oder Leitungen miteinander verbunden sind, die jeweils mit einer Passivklappe verschlossen sind.

Die aktive zweite Teilklappe 20 weist entlang der Achse A gesehen gegenüberliegend außerhalb einem Klappenteller gegenüberliegende Zapfen 22 auf, die in dem Aktivgehäuse 24 um die Achse A drehbar gelagert sind. Ferner weist die zweite Teilklappe 20 längs der Achse A gegenüberliegend in dem Bereich des Klappentellers Erhebungen 21 auf, die für ein Zusammenwirken mit Schnittstellenflächen 15, 35 der ersten und zweiten Teilklappe 10, 30 bestimmt sind, da die passiven Teilklappen 10, 30 entsprechende Vertiefungen 11, 31 aufweisen. Derartige Oberflächentopographien der Schnittstellenflächen 15, 25, 35 sorgen dafür, dass die Teilklappen 10, 20, 30 beim Andocken zueinander zentriert werden und sichern zudem die zentrierte Lage in jeder der erwähnten Stellungen der Mehrfachklappenvorrichtung zueinander.

Die aktive Platte 20 ist dem Aktivgehäuse in Schließstellung zugewandt von einem Dichtband 26 umrandet. Demnach ist jede der Schnittstellenflächen 15, 25, 35 von dem Dichtband 26 umrandet. Das Dichtband 26 dichtet die Schnittstellenflächen 15, 25, 35 in jeder der Stellungen zueinander gegen das Material ab. Zudem ist vorteilhaft das Dichtband 26 gegen das jeweilige Passivgehäuse 14, 24 abstreifbar, während die Teilklappen 10, 20, 30 die Schließstellung erreichen. In Schließstellung befindet sich das Dichtband 26 in einem verdichteten Zustand zwischen der zweiten Teilklappe 20 und dem Aktivgehäuse 24.

Das Aktivgehäuse 24 weist bezüglich der Achse A gegenüberliegend angeordnete Exzenter auf, die in Andockstellung gegen Passivgehäuse 14, 34 der ersten und dritten Teilklappe 10, 30 ausschwenkbar sind, um die Gehäuse 14, 24, 35 in Andockposition gegeneinander zu verspannen. Dabei greifen die Exzenter in eine umlaufende Nut in dem jeweiligen Passivgehäuse 14, 34.

Die Gestaltung des Passivgehäuses 14, 34 und einer der Passivklappen 10, 30 ist in Fig. 8 dargestellt. Das Passivgehäuse 14, 34 besteht aus einem der Aktivklappe 20 zugewandt einseitig spreizbaren Mantel 141 mit entlang der Durchflussrichtung D gesehen einem dem jeweiligen Gebinde ab- und der Aktivklappe 20 zugewandten Aufnahmeabschnitt 143. In dem Aufnahmeabschnitt 143 sind entlang der Durchflussrichtung D ausgerichtete, einseitig offene Schlitze 146 den Mantel 141 von außen nach innen durchbrechend angeordnet.

In dem Aufnahmeabschnitt 143 ist ein Ring 142 aufgenommen, der den Mantel 141 in Durchflussrichtung D der Aktivklappe zugewandt überragt, so dass eine Dichtfläche sowohl zwischen den Gehäusen 14, 24, 34 wie auch zwischen dem Mantel 141 und der Passivklappe 10, 30 ausgebildet ist. Der ersten bzw. dritten Teilklappe 10, 30 zugewandt weist der Ring 142 eine Innenfläche 145 auf, mit der die Abdichtung gegen die erste bzw. die dritte Teilklappe 10, 30 erfolgt.

Der Ring 142 dient nicht nur der Abdichtung sondern auch der Sicherung der Passivklappe 10, 30 in der Schließstellung. Der Ring 142 wird durch die erste bzw. die dritte Teilklappe 10, 30 nach außen gespannt, wenn sich die Teilklappe 10, 30 in Schließstellung befindet. Der Ring 142 entspannt sich durch seine Flexibilität nach innen, sobald die Teilklappen 10, 30 in Offenstellung gestellt werden. Eine Oberflächenkontur des Rings 142 kann vorteilhaft so die Teilklappe fixieren, wenn nur durch Überwinden eines Widerstands die erste oder dritte Teilklappe 10, 30 aus der Schließstellung geschwenkt werden kann. Dem Ring 142 nach außen folgend ist auch der Aufnahmeabschnitt 143 nach außen spreizbar.

Das Passivgehäuse 14, 34 weist ferner Lagerschalen 144 auf, deren Wölbung koaxial hohl- und halb zylindrisch zur Achse A ausgebildet ist. Die Lagerschalen 144 sind entlang der Achse A einander gegenüberliegend sowohl in dem Mantel 141 wie auch in dem Ring 142 aufgenommen.

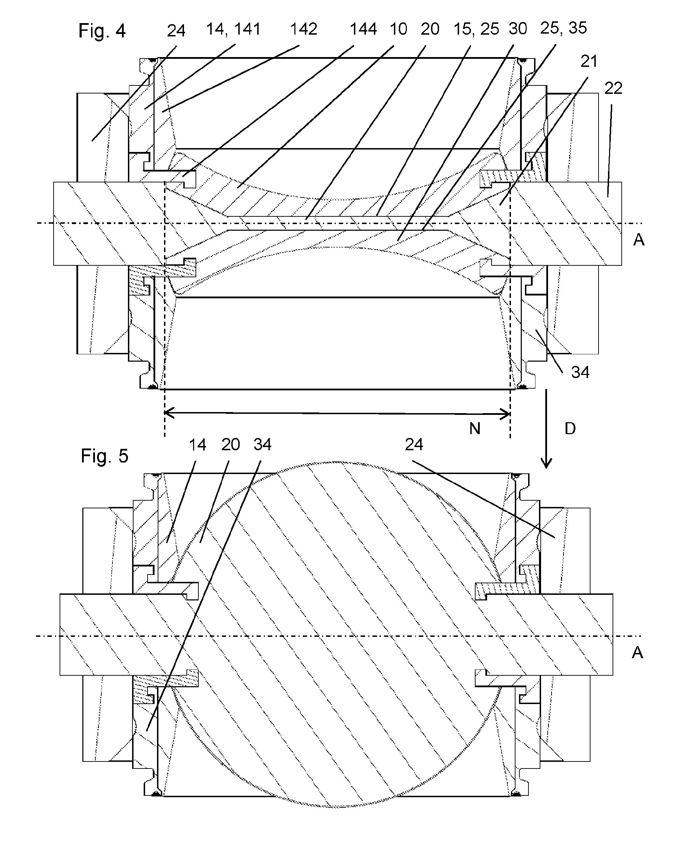

Die aktive zweite Teilklappe 20 ist mittels ihrer Zapfen 22 um die Achse A drehbar angeordnet und steht mit ihren Schnittstellenflächen 15 mit den passiven Teilklappen 10, 30 in Kontakt, so dass diese von der aktiven Teilklappe 20 bei dem Umstellen von der Schließstellung in die Offenstellung mitgenommen werden können. Dabei bleiben die passiven Teilklappen 10, 30 mindestens durch die Lagerschalen 144 in Position, wobei die Lagerschalen 144 in die passiven Teilklappen 10, 30 hineinragen, in der Offenstellung auch in die zweite Teilklappe 20 (vergl. Fig. 5). Das Aktivgehäuse 24 lagert dabei die Zapfen 22 der Achse A folgend zusätzlich zu der Lagerung in den Lagerschalen 144 im Anschluss an die Lagerschalen 144 ebenfalls drehbar.

In Kontakt mit dem Material treten in den verschiedenen Stellungen der Mehrfachklappenvorrichtung ausschließlich die Passivgehäuse 14, 34, das Dichtband 26 und den Schnittstellenflächen 15, 35 abgewandte Kontaktoberflächen 17 der ersten und dritten Teilklappe 10, 30.

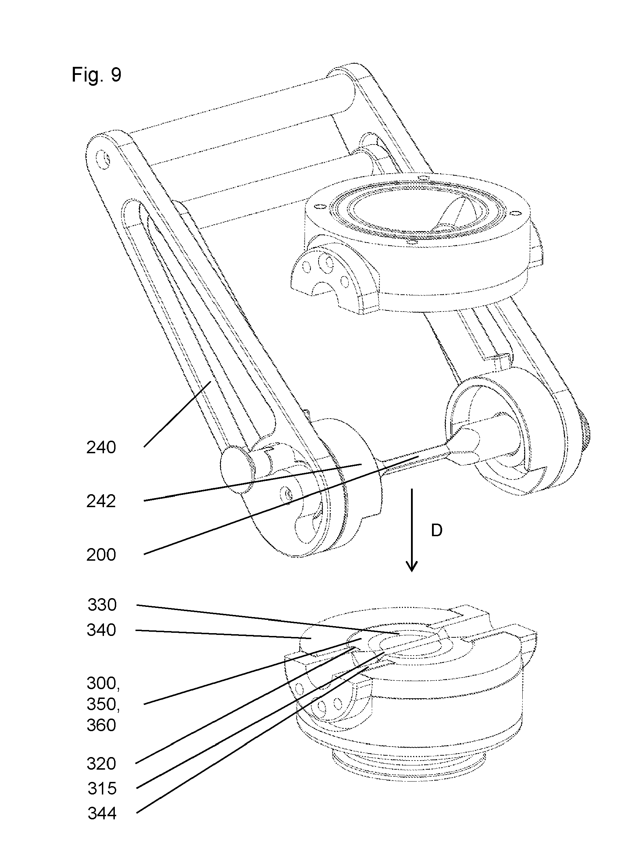

In Fig. 9 ist ein Ausführungsbeispiel einer erfindungsgemäßen Passivklappe 300 dargestellt. Die Passivklappe 300 kann als Alternative zu den ersten und dritten Teilklappen 10, 30 der Figuren 1 bis 8 angesehen werden. Anstelle der zweiten Teilklappe 20 ist nunmehr ein Werkzeug 200 längs der Achse A angeordnet, dass in eine Längsnut 315 der Passivklappe 300 einlegbar ist. Die Längsnut 315 verläuft längs der Achse A.

Das Werkzeug 200 erstreckt sich als längliches Bauteil zwischen zwei starr miteinander verbundenen Betätigungshebeln 240, die mit statt eines Aktivgehäuses vorgesehenen runden Fassungen 242 um die Gehäuse 340 der Passivklappe 300 zu greifen bestimmt sind. Mittels der Betätigungshebel 240 und einer Sicherungseinrichtung ist das Werkzeug 200 um die Achse A drehbar und nimmt die Passivklappen 300 mit, wenn die Fassungen 242 entsprechend eine Sicherheitsvorgabe angesetzt sind. Dazu weist das Werkzeug 240 eine Kontur auf, deren Flächen an wenigstens abschnittsweise kongruenten Schnittstellenflächen 350 in den Längsnuten 320 der Passivklappen 300 anliegen.

Entlang der Achse A sind gegenüberliegend um die Achse A herum halbrunde Lagernuten 320 in die Passivklappe 300 eingebracht, in denen eine Lagerschale 344 des Gehäuses 320 eingreift. Die Lagerschalen 344 lagern auf diese Art die Passivklappe 300 um die Achse A drehbar in dem Gehäuse 340, wobei gemäß einer vorteilhaften Ausführungsform das Verdrehen solange gesperrt ist, bis die Fassungen 242 angesetzt sind.

Die Schnittstellenflächen 350 der Passivklappen weisen radial innen einen abgesenkten Bereich 330 auf, der bis zu einer radial außen umlaufenden Dichtfläche 360 reicht. Somit sind die aneinander anliegenden Flächen auf für die Dichtwirkung wesentliche Bereiche reduziert. Nur diese Bereiche müssen frei von Fremdstoffen bleiben, um Abhebungen zu vermeiden.

### Bezugszeichenliste:

- 10: erste Teilklappe
- 11: Vertiefung
- 14: Passivgehäuse
- 15: Schnittstellenfläche
- 17: Kontaktoberfläche
- 20: zweite Teilklappe
- 21: Erhebung
- 22: Zapfen
- 24: Aktivgehäuse
- 25: Schnittstellenfläche
- 26: Dichtband
- 30: dritte Teilklappe
- 31: Vertiefung
- 34: Passivgehäuse
- 35: Schnittstellenfläche
- 141: Mantel
- 142: Ring
- 143: Aufnahmeabschnitt
- 144: Lagerschale
- 145: Innenfläche
- 146: Schlitz
- 200: Werkzeug
- 240: Hebel
- 242: Fassung
- 300: Passivklappe
- 315: Längsnut

- 320: Lagernut
- 330: abgesenkter Bereich
- 340: Gehäuse
- 344: Lagerschale
- 350: Schnittstellenfläche
- 360: Dichtfläche
- A: Achse
- D: Durchflussrichtung
- N: Nenndurchmesser

## Patentansprüche

1. Passivklappe (10, 30, 300) für Mehrfachklappenvorrichtungen, zum Verschließen eines Behälters oder einer Leitung, wobei die Passivklappe (10, 30, 300) um eine Achse (A) drehbar in einem Gehäuse (34, 340) angeordnet ist, um den Behälter oder die Leitung in einer Schließstellung vollumfänglich abgedichtet zu verschließen und in einer Offenstellung wenigstens einseitig in einer Durchflussrichtung (D) einen Durchfluss eines fluiden Mediums passieren zu lassen,
**dadurch gekennzeichnet, dass** die Passivklappe (10, 30, 300) frei von positiv aus der Passivklappe (10, 30, 300) herausragenden Lagerstutzen ausgebildet ist.

2. Passivklappe (10, 30, 300) nach Anspruch 1,
**dadurch gekennzeichnet, dass** wenigstens zwei längs der Achse (A) gegenüberliegende Lagernuten (320) um die Achse (A) der Drehbarkeit entsprechend ausgeführt und negativ in die Passivklappe (10, 30, 300) hinein ausgespart sind.

3. Passivklappe (300) nach einem der Ansprüche 1 oder 2,
**dadurch gekennzeichnet, dass** sich längs der Achse (A) eine Längsnut (330) über eine dem Behälter oder der Leitung abwendbare Schnittstellenfläche (350) der Passivklappe (300) erstreckt, in die ein die Drehbewegung der Passivklappe (300) übertragendes Werkzeug (200) konturschlüssig einlegbar ist.

4. Passivklappe (300) nach einem der Ansprüche 1 bis 3,
**dadurch gekennzeichnet, dass** mittig in einer dem Behälter oder der Leitung abwendbaren Schnittstellenfläche (350) ein bis zu einer die Schnittstellenfläche (350) radial außen abschließenden Dichtfläche (360) reichender, abgesenkter Bereich (330) ausgebildet ist, sodass ein Hohlraum.

5. Mehrfachklappenvorrichtung für ein kontaminationsfreies Verbinden zweier Gebinde oder zweier Leitungen, mit um eine einzige Achse (A) drehbaren Teilklappen, die jeweils in einem Gehäuse gelagert und derart in dem jeweiligen Gehäuse angeordnet sind, dass in einer Andockstellung ihre Außenflächen als Schnittstellenflächen gegeneinander abgedichtet miteinander verbunden sind,
**dadurch gekennzeichnet, dass** mindestens drei im Wesentlichen parallel zueinander angeordnete und umweltdicht miteinander verspannbare Teilklappen (10, 20, 30) um die einzige gemeinsame Achse (A) drehbar sind.

6. Mehrfachklappenvorrichtung nach Anspruch 5,
**dadurch gekennzeichnet, dass** von den drei Teilklappen (10, 20, 30) eine erste Teilklappe (10) und eine dritte Teilklappe (30) als passive Teilklappen mit einem Nenndurchmesser (N) bzw. einem äquivalenten Nennmaß für nicht runde Querschnitte der Teilklappen ausgeführt sind, mit jeweils einer den Schnittstellenflächen (15, 35) abgewandten Kontaktoberfläche (17, 37) für einen Kontakt mit einem in einer Durchflussrichtung (D) durch die Mehrfachklappenvorrichtung leitbaren Material und mit je Teilkappe einer die Schnittstellenflächen (15, 35) außen umrandenden Dichtfläche für eine Abdichtung gegenüber einem jeweiligen Passivgehäuse (14, 34) bezüglich des Materials, wobei die erste und dritte Teilklappe (10, 30) jeweils nirgends über ihren jeweiligen Nenndurchmesser (N) bzw. ihr Nennmaß herausragt.

7. Mehrfachklappenvorrichtung nach einem der Ansprüche 5 oder 6, **dadurch gekennzeichnet, dass** von den drei Teilklappen (10, 20, 30) eine zweite Teilklappe (20) als aktive Teilklappe ausgeführt ist, mit zwei gegenüberliegenden Schnittstellenflächen (25) für einen jeweiligen flächigen Kontakt mit passiven Teilklappen (10, 30) und mit entlang der Achse (A) gegenüberliegend angeordneten Zapfen (22) für eine drehbare Lagerung in einem Aktivgehäuse(24), sodass die passiven Teilklappen (10, 30) mittels der aktiven Teilklappe (20) drehbar sind.

8. Mehrfachklappenvorrichtung nach Anspruch 6 oder 7,
**dadurch gekennzeichnet, dass** das Passivgehäuse (14, 34) im Wesentlichen aus einem mindestens abschnittsweise spreizbaren Mantel (141) mit einem Aufnahmeabschnitt (143) besteht und ferner einen Ring (142) aufweist, der außen von dem Aufnahmeabschnitt (143) spreizbar gehalten wird und dem Gebinde bzw. der Leitung abgewandt über den Mantel (141) hinausragt.

9. Mehrfachklappenvorrichtung nach Anspruch 8,
**dadurch gekennzeichnet, dass** durchgehende, parallel zu der Durchflussrichtung (D) ausgerichtete und einseitig offene Schlitze (146) den Mantel (141) in dem Aufnahmeabschnitt (143) durchbrechen, sodass dieser spreizbar ist.

10. Mehrfachklappenvorrichtung nach einem der Ansprüche 8 oder 9, **dadurch gekennzeichnet, dass** der Ring (142) nach außen dehnbar ausgebildet ist, wobei eine entsprechende Deformation mehrfach flexibel rückstellbar ist.

11. Mehrfachklappenvorrichtung nach einem der Ansprüche 6 bis 10, **dadurch gekennzeichnet, dass** das Passivgehäuse (14, 34) entlang der Achse (A) gegenüberliegend in Richtung der Achse (A) ausgerichtet angeordnete Lagerschalen (144) aufweist, die nach innen mit einem Griffabschnitt aus einer ansonsten entsprechend der Dichtfläche geformten Innenfläche (145) herausragen, um in die Passivklappe (10, 30) zu greifen und diese drehbar zu lagern, und die außen mit einem Schalenabschnitt zum Aufnehmen eines Zapfens (22) ausgebildet sind.

12. Mehrfachklappenvorrichtung nach einem der Ansprüche 6 bis 11, **dadurch gekennzeichnet, dass** die passive erste bzw. dritte Teilklappe (10, 30) in ihrer Schnittstellenfläche (15) entlang der Achse (A) gegenüberliegende Vertiefungen (11) aufweist.

13. Mehrfachklappenvorrichtung nach einem der Ansprüche 7 bis 12, **dadurch gekennzeichnet, dass** die zweite Teilklappe (20) auf ihren Schnittstellenflächen (25) entlang der Achse (A) gegenüberliegende Erhebungen (21) aufweist.

14. Mehrfachklappenvorrichtung nach einem der Ansprüche 7 bis 13, **dadurch gekennzeichnet, dass** die Schnittstellenflächen (25) der zweiten Teilklappe (20) außen, dem Aktivgehäuse (24 zugewandt durch ein Dichtband (26) miteinander verbunden sind, dass die Schnittstellenflächen (25) außen umrandet und in einem entspannten Zustand den Nenndurchmesser (N) bzw. das größte Nennmaß der ersten und dritten Teilklappe (10, 30) nach außen überragt und dass mit gegenüberliegenden Dichtabschnitten jeweils einer Schnittstellenfläche (15, 35) der ersten oder der dritten Teilklappe (10, 30) zugewandt ist.
